(19) Europäisches Patentamt

European Patent Office

Office européen des brevets

(11) EP 1 355 479 B1

## (12) EUROPEAN PATENT SPECIFICATION

(45) Date of publication and mention
of the grant of the patent:
**10.08.2005 Bulletin 2005/32**

(51) Int Cl.⁷: **H04M 3/22**, H04L 12/26,
H04L 29/08

(21) Application number: **02252658.6**

(22) Date of filing: **15.04.2002**

(54) **An apparatus and method for processing information from a telecommunications network**

Vorrichtung und Verfahren zur Verarbeitung von Information aus einem Telekommunikationsnetz

Procédé et appareil permettant de traiter les informations provenant d'un réseau de télécommunication

(84) Designated Contracting States:
**DE FR GB**

(43) Date of publication of application:
**22.10.2003 Bulletin 2003/43**

(60) Divisional application:
**05104562.3**

(73) Proprietor: **Agilent Technologies, Inc. - a Delaware corporation -**
**Palo Alto, CA 94303-0870 (US)**

(72) Inventor: **Gilmour, Bruce**
**Fife, KY11 9YB (GB)**

(74) Representative: **Coker, David Graeme et al**
**Agilent Technologies UK Ltd,**
**Legal Dept,**
**Eskdale Road,**
**Winnersh Triangle**
**Wokingham, Berks RG41 5DZ (GB)**

(56) References cited:
**EP-A- 0 782 311**     **WO-A-01/45370**
**US-A- 5 794 009**

• **POZEFSKY D ET AL: "MULTIPROTOCOL TRANSPORT NETWORKING: ELIMINATING APPLICATION DEPENDENCIES ON COMMUNICATIONS PROTOCOLS" , IBM SYSTEMS JOURNAL, IBM CORP. ARMONK, NEW YORK, US, VOL. 34, NR. 3, PAGE(S) 472-499 XP000529593 ISSN: 0018-8670 * figure 5 ***

**Description**

Field of the Invention

This invention relates to an apparatus and method for processing information from a telecommunications network, particularly to an apparatus and method for collating information relating to different transactions on the network.

Background of the Invention

In modern switched telecommunications systems (in particular, modem Public Switched Telephone Networks (PSTNs) and Public Land Mobile Networks (PLMNs)) it has become common practice to provide two related but separate network infrastructures: a bearer or transmission network for carrying end-user voice and data traffic, and a signalling network for controlling the setup and release of bearer channels through the bearer network in accordance with control signals transferred through the signalling network (sometimes known as out-of-band signalling). In practice, such signalling networks comprise highspeed computers interconnected by signalling links; computer programs control the computers to provide a set of operational and signalling functions in accordance with a standardised protocol.

One example of such a signalling protocol is the Signalling System No. 7 (SS7), whether as specified by the CCITT, ANSI, ETSI (for GSM), Bellcore or similar body, such as a network being herein referred to as an SS7 network. Another known signalling protocol is the General Packet Radio Service Tunneling Protocol (GTP) used in the General Packet Radio Service (GPRS), such as is used for GSM data traffic. As is known in connection with such networks, signalling information is passed over the signalling links to carry out particular signalling conversation, or transaction. Any particular transaction requires a number of messages to be sent between two nodes in the network (endpoints of the transaction). A transaction can either carry out a procedure, such as to create a context identifier, or for hand-off control, or can request information, for example, to provide capability information. A context is a unique transaction between two end nodes that can be identified by a context identifier included in all messages relating to that transaction.

Both the SS7 and the GPRS signalling protocols belong to a class of signalling protocols characterised as consisting of a number of call models (transactions) built from a subset of messages defined by the protocol. Some of the signalling protocols in this class can be distinguished in that the messages in a call model utilise a single transactional key to uniquely identify a message belonging to the same context between the end points involved in the transaction. For example in the single key SS7 protocol the key is often a machine generated 32 bit number, whereas the GPRS Tunnelling Protocol (GTP) uses the GSM IMSI identifier plus one further digit to provide some 16 possible different contexts for a single IMSI. Of course, individual protocols have different rules for retransmission of messages during a transaction and the conditions that must be met in order to declare a transaction as being completed successfully, completed with an error, or timed out (abandoned).

In order to analyse a network's operation to determine whether it is operating efficiently, it is known to analyse individual messages to determine the quality of service according to whether the messages are delayed, require retransmission, etc. However, in order to fully determine the health of a network, it is necessary not only to consider each individual message, but also to look at a complete conversation, or transaction, which requires that all context information be available for the analysis. For example, although within a context each of the messages may be transmitted efficiently and correctly, one or more of the messages, while correct in themselves, may mean that the transaction has failed if the message states that, for example, the password is incorrect, or that an address was entered incorrectly or that a node was temporarily unavailable. In such cases, knowledge of the complete transaction that failed may allow the failures to be analysed so that the functionality of the network can be improved.

It is therefore necessary to gather together all the messages to build a complete transaction for further analysis. It is known to provide such a transaction builder for particular signalling protocols. However, since a telecommunications network can have several different signalling protocols running on the network, it is necessary to have a number of different transaction builders available, so that transactions in different protocols can be properly collected together. Such known transaction builders rely on knowledge of the call models in particular protocols to facilitate the gathering of all the messages relating to a particular transaction. For example, particular call models would involve particular sequences of messages from one end point of the transaction to the other end point in a particular predetermined sequence, so that knowledge of the call model would allow messages in that particular sequence to be looked for during the gathering process.

PCT Application No. WO 01/45370 discloses a wireless communication network monitoring system for use in performing a user specified trace of signalling messages associated with a mobile call. However, in this case, a central processor creates and distributes signalling message filter criteria to a plurality of link monitoring modules to enable the link monitoring modules to filter signalling messages according to the filter criteria and to pass only the signalling messages that match the filer criteria back to the central processor, where they are combined into a call trace sequence.

US Patent No. 5,430,709 discloses a method of monitoring communication connections temporarily established over a network, in which an active group of call records is maintained, each call record representing a respective connection considered to be currently active. A call record is removed from the active group to a completed-call group when the corresponding connection is judged completed having regard to a continuing absence of further data units relevant to that connection.

Brief Summary of the Invention

The present invention therefore seeks to provide a method and apparatus for processing information from a telecommunications network, which overcomes, or at least reduces the above-mentioned problems of the prior art.

Accordingly, in a first aspect, the invention provides an apparatus for processing information from a telecommunications network, the apparatus comprising receiving means for receiving messages from a telecommunications network, each message being related to a particular transaction, means for generating a unique transaction identifier for each received message relating to a particular transaction, matching means coupled to the receiving means and the unique transaction identifier generating means for associating all received messages with the same unique transaction identifier into a single transaction record, means for determining when a transaction record is complete including means for comparing a period of time elapsed since a most recent received message was added to a pending transaction record with a predetermined timeout value and for designating the pending transaction record as complete when the period of time exceeds the predetermined timeout value, and an output means coupled to the matching means for outputting complete transaction records to one or more output channels for further processing, characterized by protocol determining means for determining in which one of a plurality of different predetermined protocols a received message is formatted, wherein the predetermined timeout value is associated with the particular protocol of the pending transaction record.

The apparatus may include a plurality of protocol-specific modules coupled to the protocol determining means, each module having protocol specific information stored therein, each of the protocol-specific modules preferably having a predetermined timeout value associated with the particular protocol stored therein.

In a second aspect, the invention provides a method of processing information from a telecommunications network, the method comprising the steps of receiving messages from a telecommunications network, each message being related to a particular transaction, generating a unique transaction identifier for each received message relating to a particular transaction, associating all received messages with the same unique transaction identifier into a single transaction record, comparing a period of time elapsed since a most recent received message was added to a pending transaction record with a predetermined timeout value and designating the pending transaction record as complete when the period of time exceeds the predetermined timeout value, and outputting complete transaction records to one or more output channels for further processing, characterized by the further step of determining in which one of a plurality of different predetermined protocols a received message is formatted, wherein the predetermined timeout value is associated with the particular protocol of the pending transaction record. The messages can originate from, for example, a Signalling System No. 7 (SS7) network, a GSM network, an Intelligent Network Application Part (INAP) network or an Internet Protocol (IP) network.

Brief Description of the Drawings

One embodiment of the invention will now be more fully described, by way of example, with reference to the drawings, of which:

FIG. 1 shows a schematic block diagram of a system incorporating the apparatus according to one embodiment of the present invention;
FIG. 2 shows a schematic flow chart of the overall function of the apparatus shown in FIG. 1;
FIG. 3 shows a flow chart of a procedure for obtaining a matching key in the flow chart shown in FIG. 2; and
FIG. 4 shows a flow chart of a procedure for searching for a matching context in the flow chart shown in FIG. 2.

Detailed Description of the Drawings

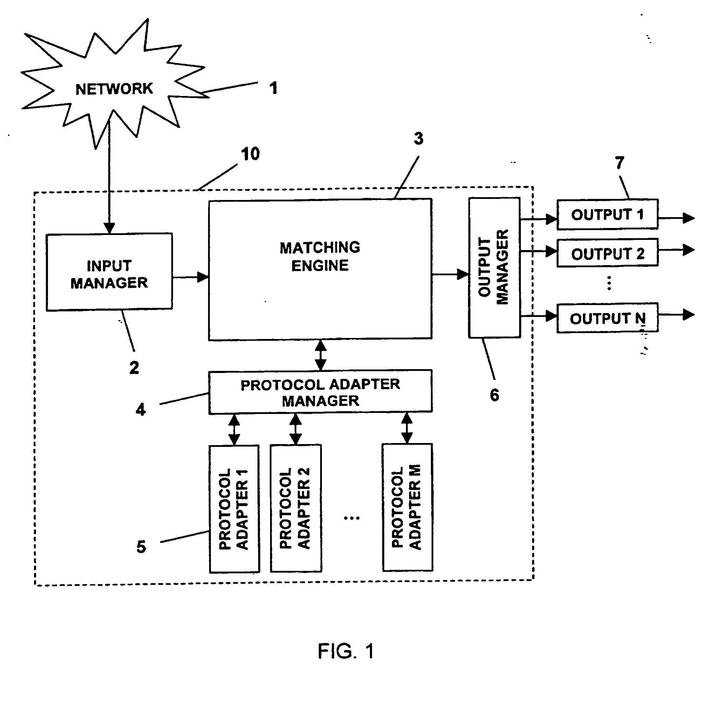

Thus, FIG. 1 shows a transaction builder 10 according to one embodiment of the present invention for processing information from a telecommunications network 1. The transaction builder 10 includes an input manager 2, which receives signalling messages from the network 1 and strips away any transport specific information to expose the signalling information. The messages can be received from different sources (nodes) within the network 1 and can be in any one of a plurality of different protocol formats, all of which can co-exist on the network. Nevertheless, in order to be able to collate a plurality of messages all relating to a single transaction, or context, the actual protocol of each message must be determined so that the message can be identified as relating to a particular transaction.

Thus, each message received by the input manager 2 is passed to a matching engine 3 from where it is presented to a protocol adapter manager 4. The protocol adapter manager 4 determines the actual signalling protocol of the message and then passes the message to one of a plurality of protocol adapters 5, each of which are specific to one particular protocol. Each of the protocol adapters 5 has protocol specific information which allows the protocol adapter to process the received message to extract signalling endpoint information from the message and to generate a unique transaction identifier (matching key) for that message to indicate to which transaction the message belongs. The matching engine 3 uses the matching key provided by the appropriate protocol adapter for each message to try to collate messages relating to the same transaction into a single transaction record. The matching engine 3 also determines whether a transaction record is complete, and, if so, passes the complete transaction record to an output manager 6, which is used to pass the transaction record to one or more output channels 7. An output channel 7 may include some processing capability, for example, a device for inspecting a particular transaction record to determine whether or not it should be processed further by a higher level processing or analysing element coupled to that output channel. The output channel may also determine the formatting that is to be applied to the output transaction record, for example by extracting defined protocol fields from the individual messages and presenting them as a single record for subsequent analysis or processing.

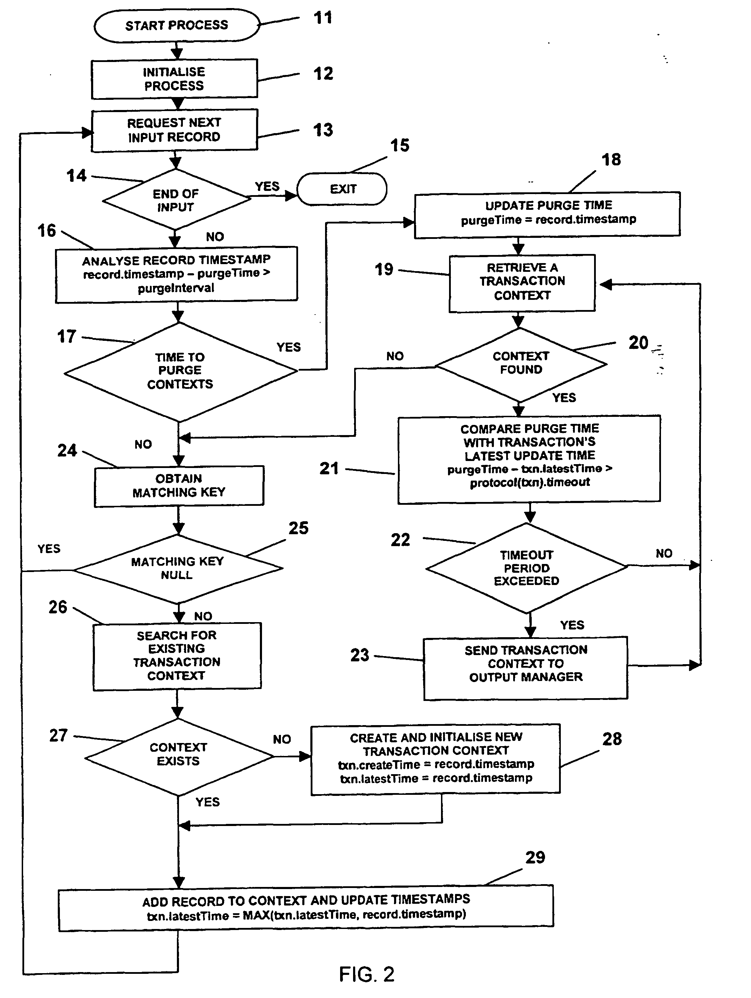

Further details of the operation of the transaction builder 10 will now be provided with reference to FIGs. 2 to 4 of the drawings. More particularly, FIG. 2 shows part of the operation of matching engine 3, which starts at step 11 and first initialises the process at step 12. The matching engine then requests the next (which may, of course, be the first) input record, or message, from the input manager 2 at step 13. The matching engine then decides, whether (at step 14), it has received such a further input record, or whether there is no more input. If no input message is received from the input manager, then the procedures ends at step 15. If, however, an input message is received, the procedure moves on to step 16, where a time of receipt of the received input message is determined. Each input message (record) is timestamped. The timestamping is usually carried out by the acquisition hardware (or network probe) as the message is (passively) captured from the network. However, in certain circumstances, the timestamping may be carried out by the input manager (or other device), or the timestamping may be carried out in the network by the node device that generated the message. At step 16, the matching engine determines whether the time elapsed between the timestamp of the input message and the last time the pending contexts (transaction records) were reviewed to determine whether any of them are complete is greater than a predetermined interval:

$$record.timestamp - purgeTime > purgeInterval$$

where the purgeInterval provides the frequency at which the matching engine should review all the transaction records it has pending to determine whether any of them are complete and therefore should be output to the output manager and the purgeTime is simply the time at which the last such review (purge) was conducted. If, at step 17, it is found that it is time to carry out a new purge, the procedure moves to step 18, where the purgeTime is updated, if not, then the procedure moves on to step 24.

If a purge is being carried out, then, after updating the purgeTime in step 18, the matching engine 3 retrieves (step 19) a first of the pending contexts and, if such a pending context is not found (step 20), returns the procedure to step 24. If, however, a pending context is found in step 20, the matching engine then determines, in step 21, whether the period between the last time that context was updated (txn.LatestTime) and the present purgeTime is greater than a predetermined Timeout interval (protocol(txn).timeout):

$$PurgeTime - txn.LatestTime > protocol(txn).timeout$$

The predetermined Timeout Interval is a protocol specific interval that is stored in the protocol adapter 5 associated with that particular protocol and defines a period during which no further messages are considered likely to be received relating to that context, based on the particular protocol concerned. Thus, the protocol adapter 5 for each protocol has a Timeout Interval stored therein that defines how long a context in a particular protocol should be kept pending by the matching engine 3 before it should be considered complete, based on the interval elapsed since the last message associated with that context was added to that transaction record.

If the matching engine determines (step 22) that the Timeout Interval for the context being considered has been exceeded, then that context is considered complete and is sent (step 23) to the output manager 6, as described above, and the matching engine returns to step 19 to retrieve the next pending context. If, however, the Timeout Interval is not found to have been exceeded, then the context remains pending and the matching engine returns to step 19 to retrieve the next pending context.

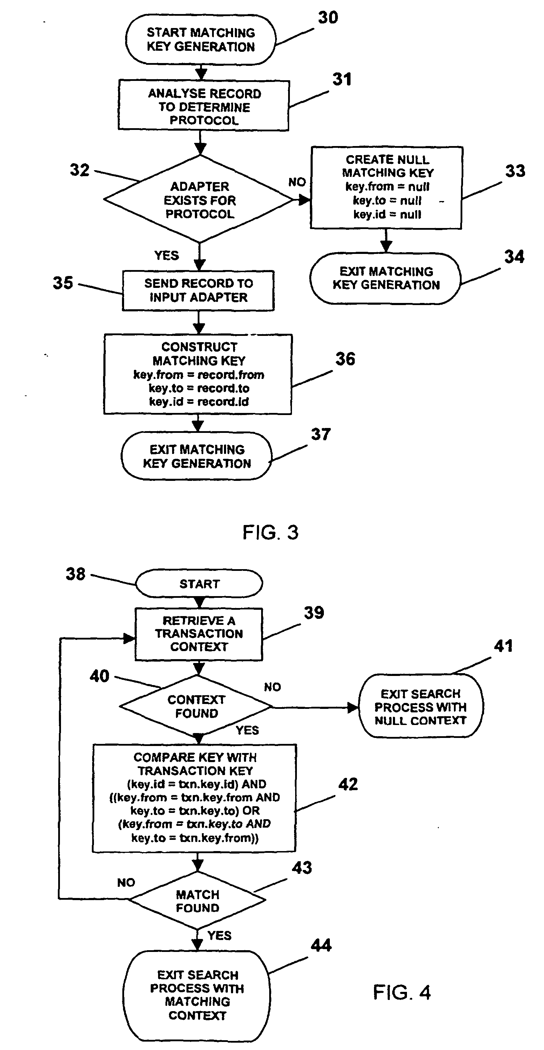

When the purging subprocess has completed and the procedure has returned to step 24, it obtains a matching key for the input message from the appropriate protocol adapter 5. This subprocess is shown in FIG. 3, where it starts at step 30 and continues at step 31 where then the protocol adapter manager 4 determines the actual signalling protocol of the input message.and decides, in step 32, whether one of the protocol adapters 5 relate to that protocol. If it is determined that no protocol adapter exists for the protocol, then a null matching key is created (step 33) in which the three components of the matching key, the identification and the endpoints of the message are all set to null values:

    key.from = null;
    key.to = null;
    key.id = null.

The null matching key is then passed back to matching engine and the subprocess of FIG. 3 exits at step 34 and passes back to step 24 of FIG. 2. If, however, it is determined, at step 32, that an appropriate protocol adapter 5 exists for the protocol that the input message is formatted in, then the message is passed in step 35 to that protocol adapter 5, which then constructs the matching key for that message at step 36 by setting the three components of the matching key to the identification and endpoint values of the message (record):

    key.from = record.from;
    key.to = record.to;
    key.id = record.id

The matching key is then passed back to matching engine and the subprocess of FIG. 3 exits at step 37 and passes back to step 24 of FIG. 2.

Returning, now, to step 24 of FIG. 2, the matching engine, having received the matching key from the protocol adapter 5, determines at step 25 whether the matching key is a null matching key or not. If it is a null matching key, in other words, if there is no protocol adapter available that corresponds to the protocol of that input message, the input message cannot be assigned to any context, so it is ignored and the procedure returns to step 13 to request the next input message from the input manager 2 and carries on as described above. If, however, the matching key is not null, then the procedure moves to step 26, in which the matching engine performs a search to try to associate the message with that matching key to a pending context.

The searching process is shown in more detail in FIG. 4, where it starts at step 38 and then continues to step 39 where a first pending context is retrieved by the matching engine from a store. If no pending context is found (step 40), the procedure moves to step 41 where the search process exits to step 26 of FIG. 2 with a result that no context was found for that matching key. If a pending context is found in step 40, the process moves to step 42, where the matching key is compared with the context key for that context. In order to produce a match, the key identification fields must match and the endpoints must be the same, although they could be in either order. In other words, as well as the identification field matching, the "from" fields and the "to" fields must match either in forward or reversed order:

| For a match: | key.id = txn.key.id |
| AND | key.from = txn.key.from |
| AND | key.to = txn.key.to |
| or, alternatively: | key.id = txn.key.id |
| AND | key.from = txn.key.to |
| AND | key.to = txn.key.from |

If either of these conditions is fulfilled, the context is considered to match and after determining that such a matching context exists at step 43, the search process exits at step 44 to step 26 of FIG. 2, since, clearly, only there can only be one pending context that could match. If neither condition is fulfilled, the context is considered not to be a match and the process returns from step 43 to step 39, where the next pending context, if there is one, is retrieved as described above.

Returning now to step 26 of FIG. 2, after the search process has been completed, the procedure determines, at step 27, whether a matching context has been found. If such a matching context was found, the procedure continues to step 29, where the message (record) is added to the context and the timestamp of the context is updated (txn. LatestTime) with the greater of the message timestamp and the current context timestamp:

$$txn.latestTime = MAX(txn.latestTime, record.timestamp)$$

The procedure then returns to step 13 and requests the next input message. If, however, no matching context was found, the procedure moves to step 28, where a new context is created and initialised with a time of creation and a context timestamp both being equal to the record timestamp:

    txn.createTime = record.timestamp
    txn.latestTime = record.timestamp

After the new context is created and initialised, the procedure moves back to step 29, where the message is added to the newly created context, as described above.

Thus, for each input message, the apparatus determines the protocol of the message, obtains a matching key from a protocol adapter supporting a particular protocol and adds the message to a matching pending context (transaction record) if there is one. If there is no matching pending context, a new context is created. The protocol adapters also include a timeout value for the particular protocol. If a pending context has had no new messages added to it for a time greater than the timeout value for that protocol, it is assumed to be complete and is output. A purge of all pending contexts to see whether they are complete is carried out at intervals, which are, possibly, not shorter than the value of the shortest timeout value defined in any of the protocol adapters.

It will therefore be appreciated that if a new protocol is supported on the network, only a new protocol adapter needs to be added, with consequent alteration of the protocol adapter manager, without the necessity for a whole new transaction builder specific to that new protocol to be provided. Furthermore, irrespective of whether the transaction builder supports more than one protocol, the provision of the timeout technique described above means that a determination can be made whether a transaction record is complete without needing a transaction record model, as in known transaction builders.

It will further be appreciated that although only one particular embodiment of the invention has been described in detail, various modifications and improvements can be made by a person skilled in the art without departing from the scope of the present invention. For example, alternative embodiments of the invention can be implemented as a computer program product for use with a computer system, the computer program product being, for example, a series of computer instructions stored on a tangible data recording medium, such as a diskette, CD-ROM, ROM, or fixed disk, or embodied in a computer data signal, the signal being transmitted over a tangible medium or a wireless medium, for example microwave or infrared. The series of computer instructions can constitute all or part of the functionality described above, and can also be stored in any memory device, volatile or non-volatile, such as semiconductor, magnetic, optical or other memory device.

## Claims

1. An apparatus (10) for processing information from a telecommunications network (1), the apparatus comprising:

   receiving means (2) for receiving messages from a telecommunications network (1), each message being related to a particular transaction;
   means (5) for generating an identification key for each received message relating to a particular transaction;
   matching means (3) coupled to the receiving means (2) and the identification key generating means (5) for associating all received messages with the same identification key into a single transaction record;
   means for determining when a transaction record is complete including means for comparing a period of time elapsed since a most recent received message was added to a pending transaction record with a predetermined timeout value and for designating the pending transaction record as complete when the period of time exceeds the predetermined timeout value; and
   an output means (6) coupled to the matching means (3) for outputting complete transaction records to one or more output channels (7) for further processing, **characterized by**
   protocol determining means (4) for determining in which one of a plurality of different predetermined protocols a received message is formatted, wherein the predetermined timeout value is associated with the particular protocol of the pending transaction record.

2. An apparatus for processing information according to claim 1, further comprising a plurality of protocol-specific modules (5) coupled to the protocol determining means, each module having protocol specific information stored therein.

3. An apparatus for processing information according to claim 2, wherein each of the protocol-specific modules (5) has a predetermined timeout value associated with the particular protocol stored therein.

4. An apparatus for processing information according to any preceding claim, wherein the identification key includes a transaction type field, a first endpoint field and a second endpoint field.

5. A method of processing information from a telecommunications network, the method comprising the steps of:

receiving (13) messages from a telecommunications network, each message being related to a particular transaction;
generating (36) an identification key for each received message relating to a particular transaction;
associating (25, 29) all received messages with the same identification key into a single transaction record;
comparing (21) a period of time elapsed since a most recent received message was added to a pending transaction record with a predetermined timeout value and designating the pending transaction record as complete when the period of time exceeds the predetermined timeout value; and outputting complete transaction records to one or more output channels for further processing, **characterized by** the further step (31) of determining in which one of a plurality of different predetermined protocols a received message is formatted, wherein the predetermined timeout value is associated with the particular protocol of the pending transaction record.

6. A computer program element, comprising computer readable program code means for causing a processor to execute a procedure to implement the method of claim 5.

7. A computer program element according to claim 6, embodied on a computer readable medium.

8. A computer readable medium, having a program stored thereon, where the program is to make a computer execute a procedure to implement the method of claim 5.

9. A programmed computer, comprising:

a memory having at least one region having a computer program element according to claim 6; and
a processor for executing the computer program element stored in the memory.

**Patentansprüche**

1. Eine Vorrichtung (10) zum Verarbeiten von Informationen von einem Telekommunikationsnetzwerk (1), wobei die Vorrichtung folgende Merkmale umfasst:

eine Empfangseinrichtung (2) zum Empfangen von Mitteilungen von einem Telekommunikationsnetzwerk (1), wobei sich jede Mitteilung auf eine bestimmte Transaktion bezieht;

eine Einrichtung (5) zum Erzeugen eines Identifikationsschlüssels für jede empfangene Mitteilung, die sich auf eine bestimmte Transaktion bezieht;

eine Übereinstimmungseinrichtung (3), die mit der Empfangseinrichtung (2) und der Identifikationsschlüsselerzeugungseinrichtung (5) gekoppelt ist, zum Zuordnen aller empfangenen Mitteilungen mit dem gleichen Identifikationsschlüssel in eine einzige Transaktionsaufzeichnung;

eine Einrichtung zum Bestimmen, wann eine Transaktionsaufzeichnung abgeschlossen ist, einschließlich einer Einrichtung zum Vergleichen einer Zeitperiode, die verstrichen ist, seit eine zuletzt empfangene Mitteilung mit einem vorbestimmten Zeitablaufwert einer wartenden Transaktionsaufzeichnung hinzugefügt wurde, und zum Bestimmen der wartenden Transaktionsaufzeichnung als abgeschlossen, wenn die Zeitperiode den vorbestimmten Zeitablaufwert überschreitet; und

eine Ausgabeeinrichtung (6), die mit der Übereinstimmungseinrichtung (3) gekoppelt ist, zum Ausgeben vollständiger Transaktionsaufzeichnungen an einen oder mehrere Ausgabekanäle (7) für eine weitere Verarbeitung, **gekennzeichnet durch**

eine Protokollbestimmungseinrichtung (4) zum Bestimmen, in welchem einer Mehrzahl von unterschiedlichen vorbestimmten Protokollen eine empfangene Mitteilung formatiert ist, wobei der vorbestimmte Zeitablaufwert dem bestimmten Protokoll der wartenden Transaktionsaufzeichnung zugeordnet ist.

**2.** Eine Vorrichtung zum Verarbeiten von Informationen gemäß Anspruch 1, die ferner eine Mehrzahl von protokollspezifischen Modulen (5) umfasst, die mit der Protokollbestimmungseinrichtung gekoppelt sind, wobei in jedem Modul protokollspezifische Informationen gespeichert sind.

**3.** Eine Vorrichtung zum Verarbeiten von Informationen gemäß Anspruch 2, bei der jedes der protokollspezifischen Module (5) einen vorbestimmten Zeitablaufwert aufweist, der dem bestimmten darin gespeicherten Protokoll zugeordnet ist.

**4.** Eine Vorrichtung zum Verarbeiten von Informationen gemäß einem der vorhergehenden Ansprüche, wobei der Identifikationsschlüssel ein Transaktionstypfeld, ein Erster-Endpunkt-Feld und ein Zweiter-Endpunkt-Feld umfasst.

**5.** Ein Verfahren zum Verarbeiten von Informationen von einem Telekommunikationsnetzwerk, wobei das Verfahren folgende Schritte umfasst:

Empfangen (13) von Mitteilungen von einem Telekommunikationsnetzwerk, wobei sich jede Mitteilung auf eine bestimmte Transaktion bezieht;

Erzeugen (36) eines Identifikationsschlüssels für jede empfangene Mitteilung, die sich auf eine bestimmte Transaktion bezieht;

Zuordnen (25, 29) aller empfangenen Mitteilungen mit dem gleichen Identifikationsschlüssel in eine einzige Transaktionsaufzeichnung;

Vergleichen (21) einer Zeitperiode, die verstrichen ist, seit eine zuletzt empfangene Mitteilung mit einem vorbestimmten Zeitablaufwert einer wartenden Transaktionsaufzeichnung hinzugefügt wurde, und Bestimmen der wartenden Transaktionsaufzeichnung als abgeschlossen, wenn die Zeitperiode den vorbestimmten Zeitablaufwert überschreitet; und

Ausgeben vollständiger Transaktionsaufzeichnungen an einen oder mehrere Ausgabekanäle für eine weitere Verarbeitung, **gekennzeichnet durch** den weiteren Schritt (31) des Bestimmens, in welchem einer Mehrzahl von unterschiedlichen vorbestimmten Protokollen eine empfangene Mitteilung formatiert ist, wobei der vorbestimmte Zeitablaufwert dem bestimmten Protokoll der wartenden Transaktionsaufzeichnung zugeordnet ist.

**6.** Ein Computerprogrammelement, das eine computerlesbare Programmcodeeinrichtung umfasst, zum Bewirken, dass ein Prozessor eine Prozedur ausführt, um das Verfahren von Anspruch 5 zu implementieren.

**7.** Ein Computerprogrammelement gemäß Anspruch 6, das auf einem computerlesbaren Medium ausgeführt ist.

**8.** Ein computerlesbares Medium, auf dem ein Programm gespeichert ist, wobei das Programm bewirkt, dass ein Computer eine Prozedur ausführt, um das Verfahren von Anspruch 5 zu implementieren.

**9.** Ein programmierter Computer, der folgende Merkmale umfasst:

einen Speicher mit zumindest einer Region, die ein Computerprogrammelement gemäß Anspruch 6 aufweist; und

einen Prozessor zum Ausführen des Computerprogrammelements, das in dem Speicher gespeichert ist.

**Revendications**

**1.** Appareil (10) permettant de traiter les informations provenant d'un réseau de télécommunication (1), l'appareil comprenant :

des moyens de réception (2) pour la réception des messages provenant d'un réseau de télécommunication (1), chaque message étant associé à une transaction particulière ;

des moyens pour générer (5) une clé d'identification pour chaque message reçu se rapportant à une transaction particulière ;

des moyens d'assortiment (3) couplés aux moyens de réception (2) et aux moyens générant (5) la clé d'identification pour associer tous les messages reçus ayant la même clé d'identification dans un unique enregistrement des transactions ;

des moyens pour déterminer lorsqu'un enregistrement des transactions est terminé, y compris des moyens pour comparer une période de temps écoulée depuis l'ajout d'un message reçu le plus récent à un enregistrement des transactions en cours avec une valeur de temporisation prédéterminée, et pour désigner l'enregistrement des transactions en cours comme terminé, lorsque la période de temps dépasse la valeur de temporisation prédéterminée ; et

des moyens de sortie (6) couplés aux moyens d'assortiment (3) pour l'émission d'enregistrements de transactions complets vers un ou plusieurs canaux de sortie (7) en vue du traitement ultérieur, **caractérisé par** des moyens de détermination de protocole (4) pour déterminer au sein de quel protocole d'une pluralité de différents protocoles prédéterminés un message reçu est formaté, dans lequel la valeur de temporisation prédéterminée est associée au protocole particulier de l'enregistrement des transactions en cours.

2. Appareil permettant de traiter les informations selon la revendication 1, comprenant en outre une pluralité de modules (5) spécifiques au protocole couplés aux moyens de détermination de protocole, chaque module ayant des informations spécifiques au protocole stockées dans celui-ci.

3. Appareil permettant de traiter les informations selon la revendication 2, dans lequel chacun des modules (5) spécifiques au protocole présente une valeur de temporisation prédéterminée associée au protocole particulier stocké dans celui-ci.

4. Appareil permettant de traiter les informations selon une quelconque revendication précédente, dans lequel la clé d'identification comprend un champ de type transaction, un premier champ d'extrémité et un second champ d'extrémité.

5. Procédé permettant de traiter les informations provenant d'un réseau de télécommunication, le procédé comprenant les étapes suivantes :

réception (13) des messages provenant d'un réseau de télécommunication, chaque message se rapportant à une transaction particulière ;

génération (36) d'une clé d'identification pour chaque message reçu se rapportant à une transaction particulière ;

association (25, 29) de tous les messages reçus ayant la même clé d'identification dans un unique enregistrement des transactions ;

comparaison (21) d'une période de temps écoulée depuis l'ajout d'un message reçu le plus récent à un enregistrement des transactions en cours avec une valeur de temporisation prédéterminée, et désignation de l'enregistrement des transactions en cours comme terminé, lorsque la période de temps dépasse la valeur de temporisation prédéterminée ; et

émission des enregistrements des transactions terminés vers un ou plusieurs canaux de sortie en vue du traitement ultérieur, **caractérisé par** l'étape ultérieure (31) visant à déterminer au sein de quel protocole d'une pluralité de différents protocoles prédéterminés un message reçu est formaté, dans lequel la valeur de temporisation prédéterminée est associée au protocole particulier de l'enregistrement des transactions en cours.

6. Elément de programme informatique, comprenant des moyens de codes de programme lisibles destinés à provoquer l'exécution par un processeur d'une procédure d'implémentation du procédé de la revendication 5.

7. Elément de programme informatique selon la revendication 6 incorporé sur le support informatique lisible.

8. Support informatique lisible, dans lequel est stocké un programme, le programme étant destiné à favoriser l'exécution par l'ordinateur d'une procédure d'implémentation du procédé selon la revendication 5.

9. Ordinateur programmé, comprenant :

**EP 1 355 479 B1**

une mémoire ayant au moins une région comprenant un élément de programme informatique selon la revendication 6 ; et
un processeur pour l'exécution de l'élément de programme informatique stocké dans la mémoire.

FIG. 1

START PROCESS — 11

INITIALISE PROCESS — 12

REQUEST NEXT INPUT RECORD — 13

14 — END OF INPUT — YES → EXIT — 15

NO

16 — ANALYSE RECORD TIMESTAMP
record.timestamp – purgeTime > purgeInterval

18 — UPDATE PURGE TIME
purgeTime = record.timestamp

17 — TIME TO PURGE CONTEXTS — YES

NO

19 — RETRIEVE A TRANSACTION CONTEXT

20 — CONTEXT FOUND — NO

YES

21 — COMPARE PURGE TIME WITH TRANSACTION'S LATEST UPDATE TIME
purgeTime – txn.latestTime > protocol(txn).timeout

22 — TIMEOUT PERIOD EXCEEDED — NO

YES

23 — SEND TRANSACTION CONTEXT TO OUTPUT MANAGER

24 — OBTAIN MATCHING KEY

25 — MATCHING KEY NULL — YES

NO

26 — SEARCH FOR EXISTING TRANSACTION CONTEXT

27 — CONTEXT EXISTS — NO

28 — CREATE AND INITIALISE NEW TRANSACTION CONTEXT
txn.createTime = record.timestamp
txn.latestTime = record.timestamp

YES

29 — ADD RECORD TO CONTEXT AND UPDATE TIMESTAMPS
txn.latestTime = MAX(txn.latestTime, record.timestamp)

FIG. 2

FIG. 3

FIG. 4

13